# EUROPÄISCHE PATENTSCHRIFT

(11) **EP 2 416 983 B1**
(45) Veröffentlichungstag und Bekanntmachung des Hinweises auf die Patenterteilung: **25.05.2016**
(21) Anmeldenummer: 10718904.5
(22) Anmeldetag: 07.04.2010
(51) Int. Cl.: B60L 11/18

(54) **LADESÄULE FÜR ELEKTROFAHRZEUGE**
CHARGING POST FOR ELECTRIC VEHICLES
COLONNE DE CHARGE POUR VÉHICULES ÉLECTRIQUES

(30) Priorität: 08.04.2009 DE 102009016505
(43) Veröffentlichungstag der Anmeldung: 15.02.2012
(73) Patentinhaber: RWE AG, 45128 Essen (DE)
(72) Erfinder: GAUL, Armin, 59379 Selm (DE); Diefenbach, Ingo, 59425 Unna (DE)
(74) Vertreter: Cohausz & Florack
(86) Internationale Anmeldenummer: PCT/EP2010/054595
(87) Internationale Veröffentlichungsnummer: WO 2010/115926

(56) Entgegenhaltungen:
- WO-A1-01/36750
- WO-A1-79/00391
- DE-A1- 4 131 734
- GB-A- 2 438 979

## Beschreibung

Der Gegenstand betrifft eine Ladestation für Elektrofahrzeuge mit einem mit einem Betonsockel verbindbaren Rammschutz, und einer Ladesäule. Darüber hinaus betrifft der Gegenstand ein Verfahren zur Installation einer Ladestation für Elektrofahrzeuge.

Die Verbreitung von elektrisch betriebenen Fahrzeugen wird in naher Zukunft rapide zunehmen. Mit der Verbreitung von Elektrofahrzeugen, die mit einem Elektromotor betrieben werden, muss eine funktionierende Infrastruktur zum Laden der Elektrofahrzeuge zur Verfügung gestellt werden. Neben dem Laden an der Haussteckdose muss den Benutzern von Elektrofahrzeugen die Möglichkeit eingeräumt werden, auch im öffentlichen Bereich Energie zu beziehen. Bei den bisher verfügbaren Reichweiten von Elektrofahrzeugen zwischen 50 und einigen 100 km ist es notwendig, dass auch außerhalb des häuslichen Umfeldes ein Laden der Fahrzeuge möglich ist. Daher müssen in öffentlichen Bereichen Ladestationen zur Verfügung gestellt werden, um eine stete Verfügbarkeit von Energie für Elektrofahrzeuge durch ein Versorgungsnetz zu gewährleisten. Diese Verfügbarkeit ist ein entscheidendes Kriterium für die Akzeptanz von Elektrofahrzeugen.

Im öffentlichen Bereich müssen die Ladestationen jedoch nicht lediglich für die Energieversorgung sorgen, sondern müssen sicher vor Beschädigung sein. Insbesondere müssen Vorkehrungen getroffen werden, die ein Umfahren der Ladesäulen erschweren. Auch muss Vandalismus vorgebeugt werden. Eine Zerstörung der Ladesäulen kann zu erheblichen Risiken führen, da in den Ladesäulen elektrische Leitungen verlegt werden, die mitunter elektrische Spannungen von 100 V bis einige kV aufweisen und Ströme von einigen Ampere führen können.

Aus der GB 2 438 979 A ist eine Ladestation bekannt, welche über einen Fundamentsockel gestülpt wird, der als Fundamentstange ausgebildet ist und als Rammschutz fungiert. Ein elektrischer Anschluss der Ladestation ist außerhalb der Fundamentstange vorgesehen. Die Ladestation umfasst auch einen elektrischen Anschluss für ein Fahrzeug, wobei elektrische Versorgungsleitung innerhalb des Rammschutzes verläuft und mit einem elektrischen Kasten außerhalb des Rammschutzes verbunden ist. Die elektrische Sicherheit dieser Ladestation ist im Falle der mechanischen Beschädigung gering.

Aus der WO 01/367550 A1 ist ein Mast für Ampeln, Straßenschilder oder dergleichen bekannt. Der Mast hat elastische und energieabsorbierende Eigenschaften. Ein elektrischer Anschluss innerhalb eines solchen Mastes ist dort nicht beschrieben.

Die WO 79/00391 A1 offenbart eine Befestigung für hohle Pfosten und Masten an Straßenrändern. Auch hier ist eine elektrische Sicherung nicht diskutiert.

Aus den zuvor genannten Nachteilen, lag dem Gegenstand die Aufgabe zugrunde, eine Ladestation für Elektrofahrzeuge zur Verfügung zu stellen, welche in öffentlichen Bereichen sicher und mit geringem Aufwand installierbar ist.

Eine solche Ladestation wird mit einem mit einem Betonsockel verbindbaren Rammschutz und einer Ladesäule nach Anspruch 1 zur Verfügung gestellt.

Es ist erkannt worden, dass im öffentlichen Bereich nicht lediglich eine Ladesäule auf einem Fundament angeordnet werden sollte. Vielmehr sind die Ladestationen im öffentlichen Bereich vielfältigen Gefahren ausgesetzt. Beispielsweise können die Ladestationen durch Fahrzeuge gerammt werden und umknicken. Auch ist Vandalismus ein ernstzunehmender Faktor für die Betriebssicherheit von Ladestationen. Durch das Zurverfügungstellen eines Rammschutzes kann die Ladestation sicher und fest mit einem Betonsockel verbunden werden. Der Rammschutz verfügt in der Regel über eine größere Blechdicke als die Ladesäule selbst und ist somit ein Schutz vor einem Umknicken der Ladestation bei Berührung mit einem Fahrzeug. Der Rammschutz stellt jedoch ein eigenes Bauteil dar, welches, insbesondere um ein ansprechendes optisches Erscheinungsbild der Ladestation zu erreichen, verdeckt werden sollte. Aus diesem Grunde wird vorgeschlagen, dass die Ladesäule über den Rammschutz gestülpt ist. Hierbei kann die Ladesäule bis zum Fundament bzw. einen Bodenbelag, beispielsweise Pflaster oder Wegplatten, über den Rammschutz geschoben werden.

Die Ladesäule ist regelmäßig aus einem dünneren Blech geformt und weist auf ihrer Oberfläche ein so genanntes "Corporate Design" auf, welches eine Erkennbarkeit des Netzanbieters gewährleistet. Um ein solches "Corporate Design" möglichst frei von technischen Notwendigkeiten zur Verfügung stellen zu können, wird die Ladesäule über den Rammschutz gestülpt. Der Rammschutz befindet sich demnach im Inneren der Ladesäule und ist von außen nicht erkennbar. Dennoch bietet der Rammschutz eine erhöhte Sicherheit für die Ladestation, da beim Anfahren der Ladestation durch ein Fahrzeug diese nicht unmittelbar umknickt, sondern der Rammschutz ein Umknicken verhindert.

Darüber hinaus kann der Rammschutz ohne Weiteres auf dem Betonsockel durch nicht geschultes Personal montiert werden. Kratzer oder sonstige leichte Beschädigungen an dem Rammschutz sind unproblematisch, da dieser nach der Montage der Ladesäule nicht mehr erkennbar ist. Somit ist es möglich, in einem ersten Montageschritt einen Betonsockel zu gießen oder aufzustellen, beispielsweise bei der Verwendung eine Betonsockels als Betonfertigteil, und anschließend den Rammschutz auf dem Betonsockel zu befestigen. Die so vorinstallierte Ladestation kann zu einem späteren Zeitpunkt mit der Ladesäule und den elektrischen Anschlüssen ausgestattet werden.

Der Rammschutz ist zur Aufnahme eines elektrischen Hausanschlusskastens geformt. Elektrische Hausanschlusskästen sind genormte elektrische Verteilerkästen, die eingangsseitig, abhängig vom Energieversorger, eine Energieversorgung von 360 V oder mehr ermöglichen. Ausgangsseitig stellen die Hausanschlusskästen in der Regel eine Netzspannung von 230 V oder 360 V, zur Verfügung. Hierbei kann insbesondere Drehstrom zur Verfügung gestellt werden. Darüber hinaus enthält der Hausanschlusskasten eine Hauptsicherung, die den Hausanschluss bei Kurzschluss von der Hauptverteilung oder bei starker Überlastung vom öffentlichen Versorgungsnetz trennt. Im Hausanschlusskasten sind NH-Sicherungen der Größe NH 00 bis NH 2 oder selektive Leitungsschutzschalter installiert.

Da die Hausanschlusskästen genormte Bauteile sind, ist es bevorzugt, dass der Rammschutz zur Aufnahme dieser Teile geformt ist. Dies ermöglicht es, in besonders einfacher Weise den Hausanschlusskasten in dem Rammschutz zu installieren.

Aus diesem Grunde wird auch vorgeschlagen, dass der Hausanschlusskasten mit dem Rammschutz verschraubt ist. Hierdurch ist eine sichere mechanische Verbindung des Hausanschlusskastens mit dem Rammschutz gewährleistet.

Wie eingangs bereits erläutert, dient der Rammschutz dazu, zu verhindern, dass die Ladestation beim Anfahren durch ein Fahrzeug umgeknickt wird oder durch Vandalismus beschädigt werden kann. Aus diesem Grunde wird vorgeschlagen, dass der Rammschutz metallisch ist. Beispielsweise ist der Rammschutz aus einem Blech gebildet, welches eine Blechstärke von 1 bis 10 mm aufweist. Auch kann der Rammschutz bevorzugt aus 5 Seitenteilen und einer Öffnung geformt sein. Das Bodenblech des Rammschutzes liegt regelmäßig gegenüber der offenen Seite. Um ein Umknicken und/oder eine sonstige mechanische Beschädigung sicher zu verhindern, wird vorgeschlagen, dass der Rammschutz eine Mindesthöhe von 40 cm aufweist. Bevorzugt wird eine Mindesthöhe von 45 cm.

Zur Gewährleistung des elektrischen Anschlusses wird dieser regelmäßig innerhalb des Betonsockels aus dem Boden heraus geführt. Um das hierfür benötigte Kabel innerhalb der Ladestation aufnehmen zu können, wird vorgeschlagen, dass der Rammschutz eine bodenseitige Öffnung zur Durchführung einer aus einem Betonsockel ragenden elektrischen Versorgungsleitung aufweist. Das Bodenblech des Rammschutzes ist somit mit einer Öffnung versehen, durch die die Versorgungsleitung in den Rammschutz hineingeführt werden kann. Dies ermöglicht es, eine verdeckte Installation der elektrischen Anschlüsse vorzunehmen.

Um den Rammschutz sicher mit dem Betonsockel zu verbinden, wird vorgeschlagen, dass aus dem Betonsockel Schraubbolzen ragen, die mit dem Betonsockel verbunden sind. Die Schraubbolzen ermöglichen ein Verschrauben mit dem Betonsockel. Es wird vorgeschlagen, dass der Rammschutz bodenseitige Aufnahmen für in einem Betonsockel verankerte Schrauben aufweist. Der Rammschutz wird mittels der Aufnahmen über die Schrauben gestülpt und mit Hilfe der Schrauben mit dem Betonsockel verschraubt. Dies sorgt für eine sichere, wenig anfällige Verbindung zwischen Rammschutz und Betonsockel.

Eine elektrische Versorgungsleitung ist innerhalb des Rammschutzes mit dem Hausanschlusskasten elektrisch verbunden. Die aus dem Betonsockel herausgeführte elektrische Versorgungsleitung wird durch einen Mitarbeiter eines Energieversorgers elektrisch verbunden. Dadurch steht am Ausgang des Hausanschlusskastens die notwendige Netzspannung zur Verfügung.

Um die Ladesäule mit dem Rammschutz mechanisch zu verbinden, wird vorgeschlagen, dass die Ladesäule mit dem Rammschutz verschraubt ist.

Um zu gewährleisten, dass die bezogene elektrische Energie in Rechnung gestellt werden kann, wird vorgeschlagen, dass in der Ladesäule zumindest ein elektrischer Anschluss für ein Fahrzeug angeordnet ist und dass in der Ladesäule jeweils elektrisch zwischen dem Anschluss für das Fahrzeug und dem Ausgang des Hausanschlusskastens ein Zähler und ein Kommunikationsgateway geschaltet ist. Das Kommunikationsgateway kommuniziert bevorzugt mit dem Fahrzeug über das Ladekabel. Somit kann das Fahrzeug über das Ladekabel der Ladestation bzw. den in der Ladestation verbauten Komponenten seine Identifikation mitteilen. Eine Abrechnung der bezogenen und vom Zähler erfassten Energie ist dann zusammen mit der Identifikation des Fahrzeugs möglich. Hierbei kann die gemessene Energiemenge gemeinsam mit der Fahrzeugidentifikation an eine Abrechnungszentrale übermittelt werden.

Um eine erhöhte Stabilität des Rammschutzes zu erreichen, wird vorgeschlagen, dass zumindest ein Winkelstück zwischen einem Boden und einem Seitenteil des Rammschutzes angeordnet ist. Bevorzugt sind ein bis zwei Winkelstücke pro Seitenteil vorgesehen. Die Winkelstücke sind mit dem Boden und dem Seitenteil bevorzugt verschweißt. Die Winkelstücke liegen im Inneren des Rammschutzes.

Zur besonders einfachen Montage wird ein Verfahren zur Installation einer Ladestation für Elektrofahrzeuge vorgeschlagen, bei dem ein Rammschutz mit einem Betonsockel verbunden wird, und bei dem eine Ladesäule an dem Rammschutz montiert wird, derart, dass der Rammschutz im montierten Zustand der Ladesäule innerhalb der Ladesäule angeordnet ist.

Nachfolgend wird der Gegenstand anhand einer Ausführungsbeispiele zeigenden Zeichnung näher erläutert. In der Zeichnung zeigen:
- Fig. 1: eine erste Ansicht eine Rammschutzes;
- Fig. 2: eine zweite Detailansicht eines Rammschutzes;
- Fig. 3: eine Ansicht eines Rammschutzes mit einem Hausanschlusskasten;
- Fig. 4: eine Ansicht eines Rammschutzes mit einer Ladesäule im nicht installierten Zustand;
- Fig. 5: eine Ansicht einer Ladesäule mit einem verdeckten Rammschutz.

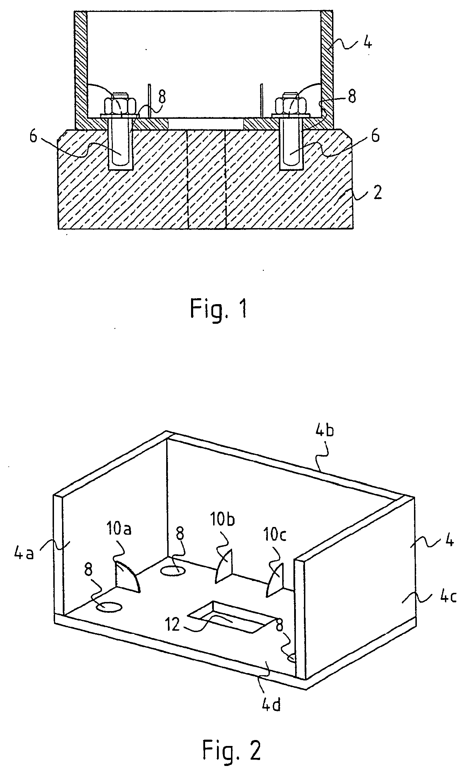

Fig. 1 zeigt eine Detailansicht eines Betonsockels 2 der mit einem Rammschutz 4 verbunden ist. Der Betonsockel 2 ist bevorzugt in das Erdreich eingelassen und kann von einer Tiefbaufirma hergestellt werden. In dem Betonsockel 2 befinden sich zwei Anschlussbolzen 6, welche mit dem Betonsockel 2 fest verankert sind. Die Anschlussbolzen 6 ragen aus dem Betonsockel 2 hervor und weisen zumindest im herausstehenden Bereich ein Gewinde auf.

Nachdem der Betonsockel 2 gegossen wurde und ausgehärtet ist, kann der Rammschutz 4 auf die Anschlussbolzen 6 aufgeschoben werden. Hierzu weist der Rammschutz 4 Öffnungen 8 zur Aufnahme der Anschlussbolzen 6 auf. Nachdem der Rammschutz 4 auf den Anschlussbolzen 6 aufgesteckt und mit den Muttern verschraubt wurde, ist der Rammschutz fest mit dem Betonsockel 2 verbunden. Der Rammschutz 4 ist bevorzugt aus 1 bis 10 mm starken Blechen geformt. Bevorzugt sind vier oder fünf Seiten des Rammschutzes 4 aus einem Blech gebildet.

Eine Ansicht eines Rammschutzes 4 ist in der Fig. 2 dargestellt. Zu erkennen ist, dass der Rammschutz 4 aus drei Seitenteilen 4a, 4b, und 4c geformt ist. Ferner weist der Rammschutz 4 einen Boden 4d auf. Der Boden 4d ist mit den Seitenteilen 4a-c bevorzugt verschweißt. Zur Erhöhung der Stabilität der Seitenteile 4a-c wird vorgeschlagen, dass Winkeleisen 10 den Boden 4d mit dem Seitenteilen 4a-c verbinden. Bevorzugt sind an den schmalen Seiten 4a und 4c jeweils nur ein Winkeleisen 10 angeordnet, wohingegen an der langen Seite 4b zwei Winkeleisen 10 angeordnet sind. Die Winkeleisen 10 sind sowohl mit den Seitenteilen 4a, 4b, 4c, als auch mit dem Boden 4d verschweißt. Ferner ist in der Fig. 2 eine mittige Öffnung 12 im Boden 4d des Rammschutzes 4 zu erkennen. Durch diese mittige Öffnung 12 kann eine elektrische Versorgungsleitung in den Rammschutz 4 geführt werden. Bevorzugt ist die elektrische Versorgungsleitung durch den Betonsockel 2 herausgeführt und durch die Öffnung 12 in den Rammschutz 4 hineingeführt.

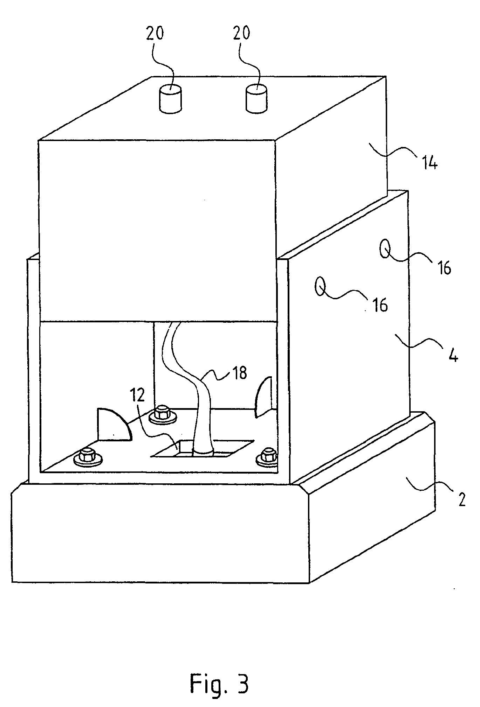

Fig. 3 zeigt einen Rammschutz 4, der bereits elektrisch angeschlossen ist. Wie in der Fig. 3 zu erkennen ist, ist ein elektrischer Hausanschlusskasten 14 zumindest teilweise in dem Rammschutz 4 angeordnet. Der Hausanschlusskasten 14 wird mit Verschraubungen 16 mit dem Hausanschlusskasten 4 mechanisch verbunden. Eine elektrische Versorgungsleitung 18, die aus dem Sockel 2 herausgeführt ist und durch die mittige Öffnung 12 in den Rammschutz 4 hineingeführt ist, wird mit dem Hausanschlusskasten 14 elektrisch verbunden. In dem Hausanschlusskasten 14 befinden sich zentrale Sicherungen, welche die Anschlüsse 20 des Hausanschlusskastens 14 vor Überströmen absichern.

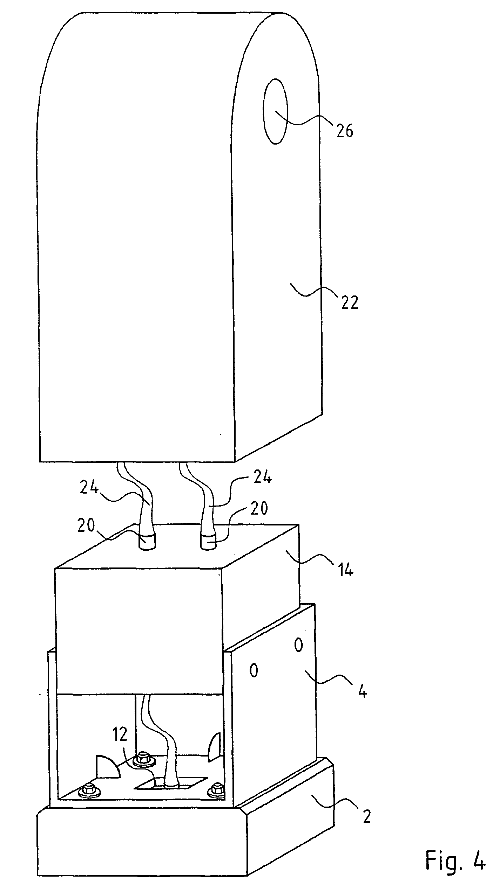

Fig. 4 zeigt eine Ansicht einer Ladestation mit einer Ladesäule 22, welche über den Rammschutz 4 gestülpt wird. In der Fig. 4 ist zu erkennen, dass die Anschlüsse 20 des Hausanschlusskastens 14 mit elektrischen Leitungen 24 verbunden sind. Die elektrischen Leitungen 24 verbinden die elektrischen Anschlüsse 20 mit einer elektrischen Anschlussdose 26. Zwischen den Anschlüssen 20 und der Anschlussdose 26 kann ein Energiezähler (nicht gezeigt) vorgesehen werden. Mit diesem Energiezähler kann die der Anschlussdose 26 entnommene elektrische Energie gemessen werden. Diese Messung kann zu Abrechnungszwecken genutzt werden. An der elektrischen Anschlussdose 26 können Stecker eingesteckt werden, um Elektrofahrzeuge mit der Ladestation zu verbinden. Die Ladesäule 22 ist so geformt, dass sie eng anliegend über den Rammschutz 4 geschoben werden kann. Mittels nicht gezeigter Verschraubungen wird die Ladesäule 22 mit dem Rammschutz 4 verschraubt.

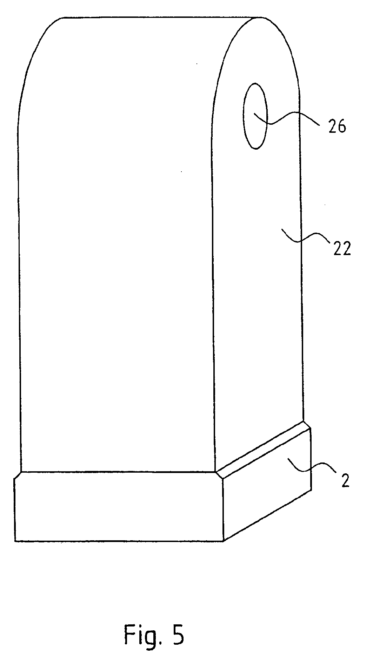

Fig. 5 zeigt eine Ladestation mit einer Ladesäule 22, welche über den Rammschutz 4 gestülpt ist. Zu erkennen ist, dass lediglich die Ladesäule 22 zu erkennen ist, die unmittelbar am Betonsockel 2, einer Pflasterung oder einem sonstigen Bodenbelag aufliegt. Durch den integrierten Rammschutz 4 ist die Ladestation gegen Vandalismus und Abknicken gesichert. Hierdurch verursacht ein Anfahren mit einem Fahrzeug nicht unmittelbar ein Umkippen der Ladestation. Außerdem kann durch den Rammschutz verhindert werden, dass die elektrischen Anschlüsse, wie auch der Hausanschlusskasten bei einer mechanischen Belastung, beispielsweise durch ein anfahrendes Fahrzeug, nicht beschädigt wird. Der Rammschutz kann den elektrischen Anschlusspunkt schützen. Der Rammschutz 4 kann höhere Kräfte aufnehmen, so dass die Ladestation einen stabilen und festen Stand hat.

## Patentansprüche

1. Ladestation für Elektrofahrzeuge mit
- einem Betonsockel (2),
- einem auf dem Betonsockel (2) montierten Rammschutz (4), und
- einer Ladesäule (22), wobei
- die Ladesäule (22) über den Rammschutz (4) gestülpt ist, derart, dass der Rammschutz (4) im montierten Zustand der Ladesäule (22) innerhalb der Ladesäule (22) angeordnet ist,
- in dem Rammschutz (4) ein genormter elektrischer Verteilkasten (14) mit einer Hauptsicherung angeordnet ist,
- eine elektrische Versorgungsleitung (18) innerhalb des Rammschutzes (4) mit dem Verteilkasten (14) elektrisch verbunden ist, und
- in der Ladesäule (22) zumindest ein elektrischer Anschluss (26) für ein Fahrzeug angeordnet ist.

2. Ladestation nach Anspruch 1, **dadurch gekennzeichnet, dass** der Verteilkasten (14) mit dem Rammschutz (4) verschraubt ist.

3. Ladestation nach Anspruch 1, **dadurch gekennzeichnet, dass** der Rammschutz (4) metallisch ist.

4. Ladestation nach Anspruch 1, **dadurch gekennzeichnet, dass** der Rammschutz (4) eine Mindesthöhe von 40 cm, bevorzugt 45 cm hat.

5. Ladestation nach Anspruch 1, **dadurch gekennzeichnet, dass** der Rammschutz (4) eine bodenseitige Öffnung (12) zur Durchführung einer aus einem Betonsockel (2) ragenden elektrischen Versorgungsleitung (18) aufweist.

6. Ladestation nach Anspruch 1, **dadurch gekennzeichnet, dass** der Rammschutz (4) bodenseitige Aufnahmen (8) für in einem Betonsockel (2) verankerte Schrauben (6) aufweist.

7. Ladestation nach Anspruch 1, **dadurch gekennzeichnet, dass** die Ladesäule (22) mit dem Rammschutz (4) verschraubt ist.

8. Ladestation nach Anspruch 1, **dadurch gekennzeichnet, dass** zumindest ein Winkelstück (10) zwischen einem Boden (4d) und einem Seitenteil (4a-c) des Rammschutzes angeordnet ist.

9. Verfahren zur Installation einer Ladestation für Elektrofahrzeuge mit
- Giessen eines Betonsockels (2) und Einlassen des Betonsockels (2) in das Erdreich,
- Montieren eines Rammschutzes (4) auf dem eingelassenen Betonsockel (2),
- zumindest teilweises Anordnen eines elektrischen Verteilkasten (14) mit einer Hauptsicherung in dem Rammschutz (4),
- elektrisches Verbinden des Verteilkastens (14) mit einer aus dem Betonsockel (2) herausgeführten Versorgungsleitung (18), und
- Montieren einer Ladesäule (22) an dem Rammschutz (4), derart, dass der Rammschutz (4) im montierten Zustand der Ladesäule (22) innerhalb der Ladesäule (22) angeordnet ist.

## Claims

1. Charging station for electric vehicles with
- a concrete base (2),
- a ram protection (4) mounted on the concrete base (2), and
- a charging pillar (22),
wherein
- the charging pillar (22) is put over the ram protection (4) such that the ram protection (4), when the charging pillar (22) is in the mounted state, is arranged inside the charging pillar (22),
- a standardized connection box (14) with a main fuse is arranged inside the ram protection (4),
- an electrical supply line (18) is electrically connected with the connection box (14) inside the ram protection (4), and
- in the charging pillar (22) at least one electrical connection (26) for a vehicle is arranged.

2. Charging station according to claim 1, **characterised in that** the connection box (14) is bolted to the ram protection (4).

3. Charging station according to claim 1, **characterised in that** the ram protection (4) is made of metal.

4. Charging station according to claim 1, **characterised in that** the ram protection (4) has a minimum height of 40 cm, preferably 45 cm.

5. Charging station according to claim 1, **characterised in that** the ram protection (4) has a ground-side opening (12) for passage of an electrical supply line (18) protruding from a concrete base (2).

6. Charging station according to claim 1, **characterised in that** the ram protection (4) has ground-side receivers (8) for bolts (6) anchored in a concrete base (2).

7. Charging station according to claim 1, **characterised in that** the charging pillar (22) is bolted to the ram protection (4).

8. Charging station according to claim 1, **characterised in that** at least one angle bracket (10) is arranged between a base (4d) and a side part (4a - c) of the ram protection.

9. Method for installation of a charging station for electric vehicles with
- pouring a concrete base (2) and inserting the concrete base (2) into ground,
- mounting a ram protection (4) into the inserted concrete base (2),
- at least partially arranging an electrical connection box (14) with a main fuse in the ram protection (4),
- electrically connecting the connection box (14) with an electrical supply line (18) lead through the concrete base (18)
- connection of a ram protection (4) with a concrete base (2), and
- mounting of a charging pillar (22) to the ram protection (4) such that the ram protection (4), when the charging pillar (22) is in the mounted state, is arranged inside the charging pillar (22).

## Revendications

1. Station de recharge pour des véhicules électriques, comprenant
- un socle en béton (2),
- une protection antichocs (4) montée sur le socle en béton (2), et
- une borne de recharge (22),
où la borne de recharge (22) est placée par-dessus la protection antichocs (4), de manière telle que la protection antichocs (4), une fois que la borne de recharge (22) est montée, soit disposée à l'intérieur de la borne de recharge (22),
où un coffret de distribution électrique standard (14) comprenant un coupe-circuit général est disposé dans la protection antichocs (4),
où une conduite d'alimentation électrique (18), placée à l'intérieur de la protection antichocs (4), est reliée électriquement au coffret de distribution (14), et
où au moins un branchement électrique (26) pour un véhicule est disposé dans la borne de recharge (22).

2. Station de recharge selon la revendication 1, **caractérisée en ce que** le coffret de distribution (14) est vissé avec la protection antichocs (4).

3. Station de recharge selon la revendication 1, **caractérisée en ce que** la protection antichocs (4) est métallique.

4. Station de recharge selon la revendication 1, **caractérisée en ce que** la protection antichocs (4) a une hauteur minimum de 40 cm, de préférence de 45 cm.

5. Station de recharge selon la revendication 1, **caractérisée en ce que** la protection antichocs (4) présente, sur son côté formant le fond, une ouverture (12) servant à faire passer une conduite d'alimentation électrique (18) sortant d'un socle en béton (2).

6. Station de recharge selon la revendication 1, **caractérisée en ce que** la protection antichocs (4) présente, sur son côté formant le fond, des logements (8) pour des vis (6) ancrées dans un socle en béton (2).

7. Station de recharge selon la revendication 1, **caractérisée en ce que** la borne de recharge (22) est vissée avec la protection antichocs (4).

8. Station de recharge selon la revendication 1, **caractérisée en ce qu'**au moins une pièce angulaire (10) est disposée entre un fond (4d) et une partie latérale (4a-c) de la protection antichocs.

9. Procédé d'installation d'une station de recharge pour des véhicules électriques, consistant
- à couler un socle en béton (2) et à implanter le socle en béton (2) dans le sol,
- à monter une protection antichocs (4) sur le socle en béton (2) implanté,
- à disposer au moins partiellement, dans la protection antichocs (4), un coffret de distribution électrique (14) équipé d'un coupe-circuit général,
- à établir la liaison électrique du coffret de distribution (14), avec une conduite d'alimentation (18) sortant du socle en béton (2), et
- à monter une borne de recharge (22) sur la protection antichocs (4), de manière telle que la protection antichocs (4), une fois que la borne de recharge (22) est montée, soit disposée à l'intérieur de la borne de recharge (22).
